(19) Europäisches Patentamt
European Patent Office
Office européen des brevets

(11) **EP 2 499 737 B1**

(12) **EUROPÄISCHE PATENTSCHRIFT**

(45) Veröffentlichungstag und Bekanntmachung des Hinweises auf die Patenterteilung:
**10.12.2014  Patentblatt 2014/50**

(21) Anmeldenummer: **10754508.9**

(22) Anmeldetag: **16.09.2010**

(51) Int Cl.:
*H02P 21/14* ^(2006.01)      *H02P 29/02* ^(2006.01)

(86) Internationale Anmeldenummer:
**PCT/EP2010/063607**

(87) Internationale Veröffentlichungsnummer:
**WO 2011/057838 (19.05.2011 Gazette 2011/20)**

(54) **VERFAHREN ZUM PLAUSIBILISIEREN DES DREHMOMENTES EINER ELEKTRISCHEN MASCHINE UND MASCHINENREGLER ZUR REGELUNG EINER ELEKTRISCHEN MASCHINE UND ZUR DURCHFÜHRUNG DES VERFAHRENS**

METHOD FOR CHECKING THE PLAUSIBILITY OF THE TORQUE OF AN ELECTRICAL MACHINE AND MACHINE CONTROLLER FOR CONTROLLING AN ELECTRICAL MACHINE AND FOR CARRYING OUT THE METHOD

PROCÉDÉ DE CONTRÔLE DE PLAUSIBILITÉ DU COUPLE D'UNE MACHINE ÉLECTRIQUE, ET RÉGULATEUR DE MACHINE SERVANT À LA RÉGULATION D'UNE MACHINE ÉLECTRIQUE ET À LA MISE EN OEUVRE DE CE PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **10.11.2009   DE 102009046583**

(43) Veröffentlichungstag der Anmeldung:
**19.09.2012   Patentblatt 2012/38**

(73) Patentinhaber: **Robert Bosch GmbH**
**70442 Stuttgart (DE)**

(72) Erfinder:
• **SCHLESER, Roland**
**74245 Loewenstein (DE)**
• **RAICHLE, Daniel**
**71735 Eberdingen-Nussdorf (DE)**
• **HEIDRICH, Torsten**
**71665 Vaihingen/Enz (DE)**
• **MIKULEC, Dragan**
**A-1030 Wien (AT)**
• **GOETTING, Gunther**
**70469 Stuttgart (DE)**
• **HANEL, Stephan**
**71706 Markgroeningen (DE)**

(56) Entgegenhaltungen:
**EP-A1- 1 646 525        DE-A1- 10 019 152**
**DE-A1-102006 005 854    DE-A1-102008 008 536**

EP 2 499 737 B1

**Beschreibung**

Die Erfindung betrifft ein Verfahren nach Anspruch 1 und einen Maschinenregler zur Regelung einer elektrischen Maschine nach Anspruch 15.

Stand der Technik

Für den Antrieb in Hybrid- oder Elektrofahrzeugen werden in der Regel elektrische Maschinen in Form von Drehfeldmaschinen eingesetzt, welche in Verbindung mit Wechselrichtern - häufig auch als Inverter bezeichnet - betrieben werden. Die elektrischen Maschinen werden dabei wahlweise im Motor- oder Generatorbetrieb betrieben. Im Motorbetrieb erzeugt die elektrische Maschine ein Antriebsmoment, welches beim Einsatz in einem Hybridfahrzeug einen Verbrennungsmotor, zum Beispiel in einer Beschleunigungsphase, unterstützt. Im Generatorbetrieb erzeugt die elektrische Maschine elektrische Energie, die in einem Energiespeicher, wie zum Beispiel einer Batterie oder einem Super-Cap gespeichert wird. Betriebsart und Leistung der elektrischen Maschine werden mittels einer Regeleinheit - häufig als Maschinenregler bezeichnet - über den Wechselrichter eingestellt.

Es ist bekannt, eine kontinuierliche Momentenüberwachung zur Aufdeckung von Fehlfunktionen in einem Maschinenregler einer elektrischen Maschine durchzuführen. Dies dient insbesondere dem Schutz von Fahrzeuginsassen sowie externen Verkehrsteilnehmern. Es soll eine Momentenüberhöhung und eine dadurch bedingte ungewollte Beschleunigung oder Verzögerung des Fahrzeugs verhindert werden. Der Kern einer kontinuierlichen Momentenüberwachung ist dabei der Vergleich eines von der elektrischen Maschine bereitgestellten Ist-Drehmomentes mit einem zulässigen Drehmoment. Im Normalfall ist das Ist-Drehmoment kleiner als das zulässige Drehmoment. Falls das Ist-Drehmoment das zulässige Drehmoment übersteigt, liegt ein Fehler im Maschinenregler der elektrischen Maschine vor und eine zu einem sicheren Fahrzeugzustand führende Fehlerreaktion wird eingeleitet.

In herkömmlichen Fahrzeugen wird das Drehmoment der elektrischen Maschine üblicherweise anhand eines mathematischen Maschinenmodells berechnet. Aufgabe der Momentenüberwachung ist es demzufolge, das von einem Maschinenregler modellbasiert berechnete elektromagnetische Drehmoment zu plausibilisieren.

Aus der WO 2007/025839 A1 ist ein Verfahren zur Steuerung einer Fahrzeug-Antriebseinheit mit mindestens zwei einzelnen Motoren bekannt, bei dem ein Gesamt-Ist-Moment kontinuierlich mit einem zulässigen Gesamtmoment verglichen wird. Dabei wird das Gesamt-Ist-Moment aus Einzel-Ist-Momentwerten der mindestens zwei einzelnen Motoren und das zulässige Gesamtmoment aus zulässigen Einzelmomentwerten der mindestens zwei einzelnen Motoren berechnet. Eine Fehlerreaktion wird dann eingeleitet, wenn das Vergleichen ergibt, dass das Gesamt-Ist-Moment größer ist als das zulässige Gesamtmoment.

Die Druckschrift DE 100 19 152 A1 offenbart ein Regelungssystem für die Sicherheitsüberwachung eines elektromotorischen Stellglieds mit einer modellgestützten Überwachungseinrichtung, die unter Einbezug eines Modells des Stellmotors und der Regelstrecke die Stellgüte bewertet.

Die Druckschrift WO 2005/014329 A1 offenbart ein Verfahren zum mathematischen Modellieren des Betriebs einer elektrischen Last.

Die Druckschrift DE 10 2008 008 536 A1 offenbart ein Verfahren für die Steuerung einer elektrischen Maschine eines Elektrofahrzeugs, bei welchem erfasste Betriebszustände der Maschine mit den Steuersignalen der elektrischen Maschine auf Plausibilität überprüft wird.

Die Druckschrift DE 10 2006 005 854 A1 offenbart ein Verfahren zur Bestimmung des Drehmoments einer elektrischen Maschine, bei dem eine Phasenspannung und die Drehzahl der elektrischen Maschine gemessen werden.

Offenbarung der Erfindung

Bei dem erfindungsgemäßen Verfahren zum Plausibilisieren eines anhand eines mathematischen Maschinenmodells einer elektrischen Maschine berechneten Drehmomentes wird abhängig von dem berechneten Drehmoment und einer Drehzahl der elektrischen Maschine ein erster Wert einer elektromagnetischen Leistung der elektrischen Maschine bestimmt. Außerdem werden Statorströme - häufig auch als Phasenströme bezeichnet - und Statorstrangspannungen - häufig auch als Stator- oder Phasenspannungen bezeichnet - in den Phasen der elektrischen Maschine ermittelt. Aus den Statorströmen und den Statorstrangspannungen werden Statorstromkomponenten und Statorstrangspannungskomponenten bezüglich eines statorfesten Bezugssystems berechnet. Abhängig von den Statorstromkomponenten und den Statorstrangspannungskomponenten wird ponenten wird ein zweiter Wert der elektromagnetischen Leistung der elektrischen Maschine bestimmt, welcher anschließend mit dem ersten Wert der elektromagnetischen Leistung der elektrischen Maschine verglichen wird. Ergibt sich dabei, dass der zweite Wert der elektromagnetischen Leistung der elektrischen Maschine um mehr als einen vorgegebenen Schwellenwert von dem ersten Wert der elektromagnetischen Leistung und der elektrischen Maschine abweicht, so wird das anhand des Maschinenmodells der elektrischen Maschine berechnete Drehmoment als unplausibel eingestuft und infolgedessen eine Fehlfunktion des Maschinenreglers detektiert. Als Folge der Fehlerdetektion kann die elektrische Maschine in einen sicheren Betriebszustand überführt werden oder auch ganz abgeschaltet werden.

Die Plausibilisierung des anhand des Maschinenmodells berechneten elektromagnetischen Drehmomentes beruht somit im Kern auf einer Leistungsbilanz zwischen einer maschinenmodellbasiert ermittelten Leistung (erster Wert der elektromagnetischen Leistung) und einer sensorbasiert ermittelten Vergleichsleistung. Dabei wird der als Vergleichsleistung dienende zweite Wert der elektromagnetischen Leistung auf Basis der Statorströme und Statorstrangspannungen der elektrischen Maschine, insbesondere einer Synchron-, Asynchron-, Reluktanz- oder bürstenlosen Gleichstrom-Maschine, berechnet. Eine Messung des Zwischenkreisstromes und somit eine entsprechende Stromsensorik sind zur Ermittlung der Vergleichsleistung nicht erforderlich, was Kosten spart.

Gemäß dem erfindungsgemäßen Verfahren geht auch der Flusswinkel nicht in die Berechnung der Vergleichsleistung ein. Dies bietet die zusätzliche Möglichkeit einer Plausibilisierung des Flusswinkels mit Hilfe der berechneten sensorbasiert ermittelten Vergleichsleistung.

Gemäß einer Ausführungsform der Erfindung gibt das Maschinenmodell eine Polpaarzahl, einen Längsstrom, einen Querstrom, einen Erregerfluss sowie Längs- und Querinduktivitäten der elektrischen Maschine vor, aus welchen das Drehmoment der elektrischen Maschine berechnet wird. Der Längs- und Querstrom der elektrischen Maschine bezeichnen dabei Statorstromkomponenten in den beiden orthogonalen Richtungen eines feldorientierten Bezugssystems und repräsentieren Statorstrom-Sollwerte in Abhängigkeit von der Art und dem Zustand der elektrischen Maschine. Die Längs- und Querinduktivitäten bezeichnen maschinenspezifische Statorinduktivitäten in den beiden Richtungen des feldorientierten Bezugssystems.

Gemäß einer Ausführungsform der Erfindung wird mindestens einer der Statorströme gemessen und alle nicht gemessenen Statorströme werden unter Ausnutzung der Symmetrieeigenschaften der Statorströme modellbasiert berechnet.

Werden alle Statorströme mit Hilfe von Stromsensoren gemessen, ist es möglich, durch Auswertung der Statorströme einen Fehler in der Stromsensorik zu detektieren. Dabei wird ausgenutzt, dass die Summe der Statorströme in einem idealen System Null sein muss, so dass ein Fehler detektiert werden kann, falls die Summe der Statorströme einen vorgegebenen ersten Statorstrom-Schwellenwert überschreitet. Auf diese Weise wird ohne zusätzlichen schaltungstechnischen Aufwand eine Fehlererkennung für die Stromsensorik realisiert.

Gemäß einer weiteren Ausführungsform der Erfindung werden die Statorstrangspannungen rechnerisch ermittelt. Ein der elektrischen Maschine vorgeschalteter Wechselrichter weist in der Regel für jede der Phasen der elektrischen Maschine eine Leistungsendstufe auf, welche auch Leistungsschaltelemente umfasst. Diese Leistungsschaltelemente werden von dem Maschinenregler üblicher Weise über pulsweitenmodulierte Steuersignale angesteuert. Aus diesen Steuersignalen lassen sich die Tastverhältnisse für die einzelnen Phasen der elektrischen Maschine unmittelbar ermitteln. Mit Hilfe dieser Tastverhältnisse und einer Zwischenkreisspannung, welche messtechnisch ermittelt werden kann, können die Statorstrangspannungen berechnet werden. Auf eine Messung der Statorstrangspannungen, welche grundsätzlich auch möglich ist, kann auf diese Weise verzichtet werden.

Bei der Ermittlung der Statorstrangspannungen können auch Fehlerspannungen berücksichtigt werden, welche vorteilhaft aus einem Fehlerspannungs-Kennfeld in Abhängigkeit von den Statorströmen und der Zwischenkreisspannung ausgelesen werden.

Gemäß einer weiteren Ausführungsform der Erfindung wird bei der Bestimmung des zweiten Wertes der elektromagnetischen Leistung der elektrischen Maschine eine aktuelle Verlustleistung der elektrischen Maschine berücksichtigt, wobei diese vorteilhaft aus einem Verlustleistungs-Kennfeld in Abhängigkeit von den Statorströmen und der Drehzahl der elektrischen Maschine ausgelesen wird.

Bei kleinen Drehzahlen ist es aufgrund der damit verbundenen kleinen Leistungen sinnvoll, den kritischen Betriebszustand einer ungewollten Momentenüberhöhung über einen zusätzlichen Fehlerpfad abzusichern. Im Grunddrehzahlbereich der elektrischen Maschine kann der Betrag eines maximal wirksamen Drehmoments direkt aus dem Betrag des Statorstroms ermittelt werden. Im fehlerfreien Betrieb entspricht das eingestellte Soll-Drehmoment maximal diesem Maximalwert. Abweichungen sind je nach Temperatur der Elektromaschine und ihres Rotors möglich. Somit kann im Grunddrehzahlbereich der elektrischen Maschine in Abhängigkeit von einem Betrag eines Soll-Drehmoments der Betrag eines Soll-Statorstroms ermittelt werden. Gemäß einer Ausführungsform der Erfindung wird der auf diese Weise ermittelte Betrag des Soll-Statorstroms mit dem Betrag eines Ist-Statorstroms verglichen und das anhand des Maschinenmodells berechnete Drehmoment der elektrischen Maschine wird dann als unplausibel eingestuft, wenn eine Abweichung des Betrages des Soll-Statorstroms von dem Betrag des Ist-Statorstroms einen vorgegebenen zweiten Statorstrom-Schwellenwert übersteigt. Der Betrag des Soll-Statorstromes wird dabei vorteilhaft aus einem Statorstromkennfeld in Abhängigkeit von dem Soll-Drehmoment ausgelesen.

Außerdem kann abhängig von dem zweiten Wert der elektromagnetischen Leistung und der Drehzahl der elektrischen Maschine ein Vorzeichen des wirksamen Drehmomentes ermittelt werden. Ist das Vorzeichen des wirksamen Drehmomentes ungleich dem Vorzeichen des Soll-Drehmomentes kann das anhand des Maschinenmodells berechnete Drehmoment ebenfalls als unplausibel eingestuft werden.

Durch Ausnutzung der Abhängigkeit des Drehmoment-Betrages von dem Betrag des Statorstroms im Grunddrehzahlbereich wird in diesem Bereich auf einfache Weise ein zusätzlicher Fehlerpfad geschaffen, welcher die Betriebssicherheit der elektrischen Maschine weiter erhöht.

Ein erfindungsgemäßer Maschinenregler zur Regelung einer elektrischen Maschine ist in Anspruch 15 definiert.

Weitere Merkmale und Vorteile von Ausführungsformen der Erfindung ergeben sich aus der nachfolgenden Beschreibung mit Bezug auf die beigefügte Figur, welche ein schematisches Blockschaltbild einer elektrischen Maschine sowie eines Wechselrichters mit einem efindungsgemäßen Motorregler.

Beschreibung der Ausführungsbeispiele

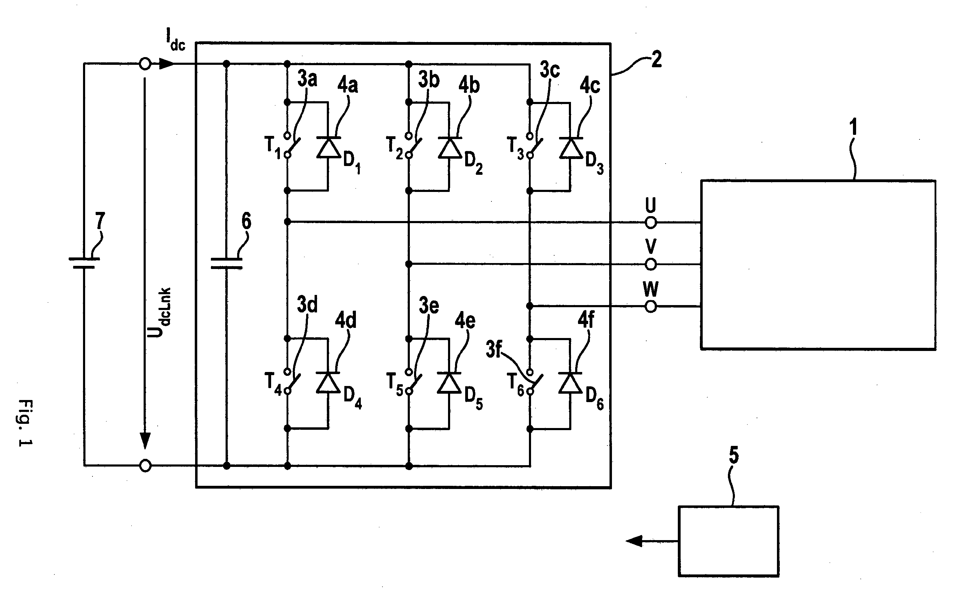

Figur 1 zeigt eine schematische Darstellung einer dreiphasigen elektrischen Maschine 1, welche beispielsweise als Synchron-, Asynchron-, Reluktanz- oder bürstenlose Gleichstrom-Maschine ausgeführt sein kann, mit einem daran angeschlossenen Pulswechselrichter 2. Der Pulswechselrichter 2 umfasst Leistungsschalter 3a-3f, welche mit einzelnen Phasen U, V, W der elektrischen Maschine 1 verbunden sind und die Phasen U, V, W entweder gegen ein hohes Versorgungsspannungspotential in Form einer Zwischenkreisspannung $U_{dcLnk}$ oder ein niedriges Bezugspotential in Form von Masse schalten. Die mit der Zwischenkreisspannung $U_{dcLnk}$ verbundenen Schalter 3a-3c werden dabei auch als "High-Side-Schalter" und die mit Masse verbundenen Schalter 3d-3f als "Low-Side-Schalter" bezeichnet. Der Pulswechselrichter 2 umfasst ferner mehrere Freilaufdioden 4a-4f, welche jeweils parallel zu einem der Schalter 3a-3f angeordnet sind.

Der Pulswechselrichter 2 bestimmt Leistung und Betriebsart der elektrischen Maschine und wird von einem Maschinenregler 5, welcher in Figur 1 lediglich schematisch dargestellt ist und auch in den Wechselrichter integriert sein kann, entsprechend angesteuert. Die elektrische Maschine 1 kann dabei wahlweise im Motor- oder Generatorbetrieb betrieben werden.

Der Pulswechselrichter 2 umfasst außerdem einen sogenannten Zwischenkreis-Kondensator 6, welcher im Wesentlichen zur Stabilisierung einer Batteriespannung dient. Das Bordnetz des Fahrzeugs mit einer Batterie 7 ist parallel zum Zwischenkreis-Kondensator 6 geschaltet.

Die elektrische Maschine 1 ist im dargestellten Ausführungsbeispiel dreiphasig ausgeführt, kann aber auch mehr oder weniger als drei Phasen aufweisen. In dem Maschinenregler wird das elektromagnetische Drehmoment $Trq_{EmMdl}$ der elektrischen Maschine 1 anhand eines mathematischen Maschinenmodells in Abhängigkeit von den maschinenspezifischen Parametern Polpaarzahl, Längsstrom, Querstrom, Erregerfluss sowie Längs- und Querinduktivitäten der elektrischen Maschine nach folgender Gleichung berechnet:

$$Trq_{EmMdl} = 3 \cdot p \cdot I_{sq} \cdot (\psi_{Exc} + I_{sd}(L_{sd} - L_{sq})) \qquad (1)$$

mit

| | |
|---|---|
| $Trq_{EmMdl}$ | Elektromagnetisches Drehmoment der Maschine (berechnet aus Modelldaten) |
| p | Polpaarzahl der Maschine |
| $I_{sd}$ | Längsstrom der Maschine (Statorstrangspannung in d-Richtung eines feldorientierten Bezugssystems) |
| $I_{sq}$ | Querstrom der Maschine (Statorstrangspannung in q-Richtung eines feldorientierten Bezugssystems) |
| $\psi_{Exc}$ | Erregerfluss der Maschine |
| $L_{sd}, L_{sq}$ | Statorinduktivitäten in d- bzw. q-Richtung des feldorientierten Bezugssystems |

Der Index "Mdl" deutet hier und im Folgenden darauf hin, dass die Berechnung der entsprechenden Größe ausschließlich auf Modelldaten beruht

Es ist auch denkbar die modellbasierte Berechnung des Drehmomentes in einer von dem Maschinenregler 5 getrennten Einheit auszuführen und dem Maschinenregler 5 lediglich das Berechnungsergebnis zur Verfügung zu stellen.

Ein erster Wert der elektromagnetischen Leistung $Pwr_{EmMdl}$ der elektrischen Maschine 1 wird gemäß der Gleichung

$$Pwr_{EmMdl} = Trq_{EmMdl} \cdot 2 \cdot \pi \cdot n \qquad (2)$$

berechnet, wobei n die Drehzahl der elektrischen Maschine 1 bezeichnet, welche zum Beispiel mit Hilfe eines Drehzahlsensors gemessen werden kann.

Alternativ dazu kann die Drehzahl n auch aus einem Winkeldifferential $((\alpha 2-\alpha 1)/(t2-t1))$ zweier zeitlich versetzt zum Zeitpunkt t1 und t2 gemessener Stromzeiger ($|I1|\cdot\exp(i\alpha 1)$ und $|I2|\cdot\exp(i\alpha 2)$) der elektrischen Maschine 1 berechnet werden. Auf diese Weise kann auf die Messung der Drehzahl n der elektrischen Maschine 1 verzichtet werden. Für eine Synchronmaschine kann dabei zusätzlich ausgenutzt werden, dass diese über ganze elektrische Umdrehungen im Mittel nur dann ein signifikantes Drehmoment abgeben kann, wenn sie synchron angesteuert wird, so dass sich der Rotor nach dem magnetischen Fluss im Stator und somit nach dem Stromzeiger ausrichtet. Das heißt eine Synchronmaschine kann nur dann ein Drehmoment über vollständige elektrische Umdrehungen abgeben, wenn die tatsächliche Drehzahl der elektrischen Maschine synchron zum Winkeldifferential verläuft.

Wird die Drehzahl n der elektrischen Maschine 1 aber dennoch gemessen, so kann die anhand des Winkeldifferentials berechnete Drehzahl zur Plausibilisierung des Drehzahlsignals des Drehzahlsensors und somit zur Fehlererkennung für die Drehzahlsensorik genutzt werden.

Statorströme $I_{sU}$, $I_{sV}$ und $I_{sW}$ in den Phasen U, V bzw. W der elektrischen Maschine 1 werden über drei, in Fig. 1 nicht dargestellte, Stromsensoren gemessen. Sofern der Sternpunkt der elektrischen Maschine nicht geerdet ist oder die Maschinenwicklungen im Dreieck verschaltet sind, muss die Summe der Statorströme gemäß Gleichung (3) Null sein.

$$I_{sU} + I_{sV} + I_{sW} = 0 \qquad\qquad (3)$$

Dieser Zusammenhang kann ausgenutzt werden, um einen Fehler in der Stromsensorik zur Messung der Statorströme zu detektieren. Dazu wird der Betrag der Stromsumme mit einem parametrierbaren ersten Statorstrom-Schwellenwert $I_{sLim}$ verglichen. Bei Überschreiten dieses Schwellenwertes wird ein Fehler in der Stromsensorik detektiert.

$$|I_{sU} + I_{sV} + I_{sW}| > I_{sLim} \Rightarrow Fehler! \qquad\qquad (4)$$

Alternativ zur Messung aller Phasenströme ist es auch möglich, nur einen oder zumindest nur einen Teil der Phasenströme zu messen und die übrigen Phasenströme unter Ausnutzung der Symmetrieeigenschaften modellbasiert zu berechnen. Die beschriebene Plausibilitätsprüfung und die damit verbundene Fehlererkennung in der Stromsensorik sind dann jedoch nicht möglich.

Aus den Statorströmen $I_{sU}$, $I_{sV}$ und $I_{sW}$ werden gemäß Gleichung (5) Statorstromkomponenten $I_{sA}$ und $I_{sB}$ in A- und B-Richtung eines statorfesten Bezugssystem - im Weiteren als A/B-System bezeichnet - berechnet.

$$\begin{pmatrix} I_{sA} \\ I_{sB} \end{pmatrix} = \frac{1}{\sqrt{2}} \cdot \begin{pmatrix} \dfrac{2}{3} & -\dfrac{1}{3} & -\dfrac{1}{3} \\ 0 & \dfrac{1}{\sqrt{3}} & -\dfrac{1}{\sqrt{3}} \end{pmatrix} \cdot \begin{pmatrix} I_{sU} \\ I_{sV} \\ I_{sW} \end{pmatrix} \qquad\qquad (5)$$

Mit Hilfe eines gemessenen oder modellbasiert berechneten Flusswinkels $\alpha_{Flx}$ können aus den Statorstromkomponenten $I_{sA}$ und $I_{sB}$ im statorfesten A/B-System zwei Stromkomponenten $I_{sd}$ und $I_{sq}$ in d-Richtung (Längsrichtung) bzw. q-Richtung (Querrichtung) eines feldorientierten Bezugssystems - im Weiteren als d/q-System bezeichnet - berechnet werden (vgl. Gleichung (6)). Diese Statorstromkomponenten $I_{sd}$ und $I_{sq}$ im d/q-System dienen als Rückführgrößen bei der Regelung der elektrischen Maschine 1.

$$\begin{pmatrix} I_{sd} \\ I_{sq} \end{pmatrix} = \begin{pmatrix} \cos\alpha_{Flx} & \sin\alpha_{Flx} \\ -\sin\alpha_{Flx} & \cos\alpha_{Flx} \end{pmatrix} \cdot \begin{pmatrix} I_{sA} \\ I_{sB} \end{pmatrix} \qquad (6)$$

Der Flusswinkel $\alpha_{Flx}$ stellt dabei den Flusswinkel im statorfesten A/B-System dar.

Aus den pulsweitenmodulierten Ansteuersignalen der Leistungsschalter 3a bis 3f können die Tastverhältnisse $dyc_U$, $dyc_V$ und $dyc_W$ für die einzelnen Phasen U, V bzw. W unmittelbar ermittelt werden. Mit Hilfe dieser Tastverhältnisse können die wirksamen Statorstrangspannungen $U_{sU}$, $U_{sV}$ und $U_{sW}$ rekonstruiert werden. Hierzu muss zusätzlich eine aktuelle Zwischenkreisspannung $U_{dcLnk}$ gemessen werden. Gemäß einer vorteilhaften Ausführungsform der Erfindung werden auch aktuelle Fehlerspannungen $U_{sUErr}$, $U_{sVErr}$ und $U_{sWErr}$ berücksichtigt, welche vorteilhaft aus einem Kennfeld in Abhängigkeit von den Statorströmen $I_{sU}$, $I_{sV}$ und $I_{sW}$ und der Zwischenkreisspannung $U_{dcLnk}$ ausgelesen werden. Die Fehlerspannungen $U_{sUErr}$, $U_{sVErr}$ und $U_{sWErr}$ sind dabei bedingt durch Totzeiten und nichtideales Schaltverhalten der Leistungsschalter 3a-3f.

Die Statorstrangspannungen $U_{sU}$, $U_{sV}$ und $U_{sW}$ ergeben sich somit zu

$$\begin{pmatrix} U_{sU} \\ U_{sV} \\ U_{sW} \end{pmatrix} = c_{PWM} \cdot U_{dcLnk} \cdot \begin{pmatrix} dyc_U \\ dyc_V \\ dyc_W \end{pmatrix} + \begin{pmatrix} U_{sUErr} \\ U_{sVErr} \\ U_{sWErr} \end{pmatrix} \qquad (7)$$

mit

$c_{PWM}$    Faktor zur Umrechnung der Zwischenkreisspannung $U_{dcLnk}$ in eine maximal mögliche Maschinenspannung

und

$$U_{sUErr} = KF(I_{sU}, U_{dcLnk}) \qquad (8.1)$$

$$U_{sVErr} = KF(I_{sV}, U_{dcLnk}) \qquad (8.2)$$

$$U_{sWErr} = KF(I_{sW}, U_{dcLnk}) \qquad (8.3)$$

wobei "KF" hier und im Folgenden andeutet, dass die Größe in einem Kennfeld in Abhängigkeit von den in Klammern angegebenen Größen hinterlegt ist.

Die beiden Strangspannungskomponenten $U_{sA}$ und $U_{sB}$ des Stators im statorfesten A/B-System werden schließlich gemäß Gleichung (10) bestimmt.

$$\begin{pmatrix} U_{sA} \\ U_{sB} \end{pmatrix} = \frac{1}{\sqrt{2}} \begin{pmatrix} \dfrac{2}{3} & -\dfrac{1}{3} & -\dfrac{1}{3} \\ 0 & \dfrac{1}{\sqrt{3}} & -\dfrac{1}{\sqrt{3}} \end{pmatrix} \cdot \begin{pmatrix} U_{sU} \\ U_{sV} \\ U_{sW} \end{pmatrix} \qquad (9)$$

Mit Hilfe der Statorstromkomponenten $I_{sA}$ und $I_{sB}$ und der Statorstrangspannungskomponenten $U_{sA}$ und $U_{sB}$ im statorfesten A/B-System kann eine elektrische Wirkleistung $Pwr_{ElMa}$ der elektrischen Maschine 1 gemäß Gleichung (11) berechnet werden.

$$Pwr_{ElMa} = 3 \cdot U_s \cdot I_s \cdot \cos\varphi = 3 \cdot \left(U_{sA} \cdot I_{sA} + U_{sB} \cdot I_{sB}\right) \qquad (10)$$

Vorteilhaft wird die Verlustleistung $Pwr_{ElMaLos}$ der elektrischen Maschine gemäß Gleichung (11) in einem Kennfeld in Abhängigkeit von dem Betrag $I_s$ des Statorstromes und der Drehzahl n hinterlegt.

$$Pwr_{ElMaLos} = KF\left(I_s, n\right) \qquad (11)$$

Der Betrag $I_s$ des Statorstromes kann dabei über die geometrische Summe der beiden orthogonalen Statorstrangspannungskomponenten $I_{sA}$ und $I_{sB}$ des A/B-Systems ermittelt werden.

$$I_s = \sqrt{I_{sA}^2 + I_{sB}^2} \qquad (12)$$

Der zweite Wert $Pwr_{EmSens}$ der elektromagnetischen Leistung der elektrischen Maschine 1 ergibt sich somit zu

$$Pwr_{EmSens} = Pwr_{ElMa} - Pwr_{ElMaLos} \qquad (13)$$

Der Index "Sens" deutet dabei darauf hin, dass zur Berechnung der Leistung keine Modelldaten, sondern ausschließlich Sensordaten verwendet werden.

Die Plausibilisierung des mit Hilfe des Maschinenmodells berechneten elektromagnetischen Drehmomentes $Trq_{EmMdl}$ erfolgt über eine Leistungsbilanz. Dabei wird die Leistung, welche das elektromagnetische Drehmoment erzeugt, einerseits aus dem Maschinenmodell gemäß Gleichung (2) und andererseits aus den Sensordaten gemäß Gleichung (13) bestimmt.

Aus der Differenz dieser beiden Werte kann ein Leistungsfehler

$$Pwr_{Err} = Pwr_{EmMdl} - Pwr_{EmSens} \qquad (14)$$

berechnet werden, der im Idealfall Null ist und im Normalbetrieb kleine Werte annimmt. Überschreitet der Betrag des so berechneten Leistungsfehlers $Pwr_{Err}$ einen vorgegebenen parametrierbaren Leistungs-Schwellenwert $Pwr_{ErrLim}$, so wird das anhand des Maschinenmodells berechnete Drehmoment als unplausibel eingestuft und dementsprechend ein Fehler detektiert.

$$\left|Pwr_{Err}\right| > Pwr_{ErrLim} \Rightarrow Fehler! \qquad (15)$$

Als Folge der Fehlerdetektion kann dann eine Ersatzreaktion angestoßen werden, welche einen sicheren Betrieb der elektrischen Maschine 1 gewährleistet.

Bei kleinen Drehzahlen ist es aufgrund der damit verbundenen kleinen Leistungen sinnvoll, den kritischen Betriebszustand einer ungewollten Momentenüberhöhung über einen zusätzlichen Fehlerpfad abzusichern.

Im Grunddrehzahlbereich kann der Betrag eines maximal wirksamen Drehmoments direkt aus dem Betrag $I_s$

des Statorstroms ermittelt werden. Der Betrag des Statorstroms kann wiederum über die geometrische Summe der beiden Orthogonalen Statorstromkomponenten im statorfesten A/B-System gemäß Gleichung (12) ermittelt werden. Die Abhängigkeit des Betrages des maximal wirksamen Drehmomentes von dem Betrag des Statorstroms kann vorteilhaft in einer Kennlinie gespeichert werden und ist für jeden Maschinentyp charakteristisch. Dabei gilt:

$$\left|Trq_{Em}\right|_{Max} = Trw_{EmAbsMax} = KL(I_s) \qquad (16)$$

Im fehlerfreien Betrieb entspricht das eingestellte Drehmoment genau diesem Maximalwert. Über die Umkehrfunktion kann für jedes geforderte SollDrehmoment $Trq_{EmDes}$ der zugehörige Statorstrom-Sollwert $I_{sDes}$ bestimmt werden.

$$I_{sDes} = KL^{-1}(Trq_{EmDes}) \qquad (17)$$

Solange ein Stromfehler $I_{sErr}$ (vgl. Gleichung (18)) unterhalb eines vorgegebenen parametrierbaren zweiten Statorstrom-Schwellenwertes $I_{sErrLim}$ bleibt, ist der Betrag des wirksamen Drehmoments $Trq_{Em}$ kleiner oder gleich dem Betrag des Soll-Drehmoments $Trq_{EmDes}$. Ansonsten ist ein Fehlerfall zu detektieren.

$$I_{sErr} = I_{sDes} - I_s \qquad (18)$$

$$\left|I_{sErr}\right| \le I_{sErrLim} \Rightarrow \left|Trq_{Em}\right| \le \left|Trq_{EmDes}\right| \qquad (19)$$

$$\left|I_{sErr}\right| > I_{sErrLim} \Rightarrow Fehler! \qquad (20)$$

Außerdem kann auch eine Prüfung des Vorzeichens des wirksamen Drehmomentes $Trq_{Em}$ erfolgen. Dies geschieht wie in Gleichung (21) gezeigt, mit Hilfe des Vorzeichens der elektromagnetischen Leistung $Pwr_{EmSens}$ gemäß Gleichung (13) und der Drehzahl n der elektrischen Maschine 1.

$$\text{sgn}(Trq_{Em}) = \frac{\text{sgn}(Pwr_{EmSens})}{\text{sgn}(n)} \qquad (21)$$

Wenn das auf diese Weise berechnete Vorzeichen nicht mit dem Vorzeichen des Soll-Drehmoments $Trq_{EmDes}$ übereinstimmt, wird ebenfalls ein Fehler detektiert.

$$\text{sgn}(Trq_{Em}) \ne \text{sgn}(Trq_{EmDes}) \Rightarrow Fehler! \qquad (22)$$

Wie sich aus den Gleichungen (19) und (29) ergibt, führt der Fall, dass das wirksame $Trq_{Em}$ Drehmoment betragsmäßig kleiner ist als der Betrag des Soll-Drehmoments $Trq_{EmDes}$ über den beschriebenen zusätzlichen Fehlerpfad nicht automatisch zu einer Fehlerdetektion. Dieser weniger kritische Fehlerfall kann aber auch im Grunddrehzahlbereich über die erfindungsgemäße Leistungsbilanz abgefangen werden.

**Patentansprüche**

1. Verfahren zum Plausibilisieren eines anhand eines Maschinenmodells berechneten Drehmoments ($Trq_{EmMdl}$) einer elektrischen Maschine (1), wobei das Verfahren **dadurch gekennzeichnet ist, dass**

   - aus dem berechneten Drehmoment ($Trq_{EmMdl}$) und einer Drehzahl (n) der elektrischen Maschine (1) ein erster Wert ($Pwr_{EmMdl}$) einer elektromagnetischen Leistung der elektrischen Maschine (1) bestimmt wird,
   - Statorströme ($I_{sU}$, $I_{sV}$, $I_{sW}$) und Statorstrangspannungen ($U_{sU}$, $U_{sV}$, $U_{sW}$) in den Phasen (U, V, W) der elektrischen Maschine (1) ermittelt werden,
   - aus den Statorströmen ($I_{sU}$, $I_{sV}$, $I_{sW}$) und den Statorstrangspannungen ($U_{sU}$, $U_{sV}$, $U_{sW}$) Statorstromkomponenten ($I_{sA}$, $I_{sB}$) und Statorstrangspannungskomponenten ($U_{sA}$, $U_{sB}$) bezüglich eines statorfesten Bezugssystems berechnet werden,
   - aus den Statorstromkomponenten ($I_{sA}$, $I_{sB}$) und den Statorstrangspannungskomponenten ($U_{sA}$, $U_{sB}$) ein zweiter Wert ($Pwr_{EmSens}$) der elektromagnetischen Leistung der elektrischen Maschine (1) bestimmt wird,
   - der erste Wert ($Pwr_{EmMdl}$) der elektromagnetischen Leistung der elektrischen Maschine (1) mit dem zweiten Wert ($Pwr_{EmSens}$) der elektromagnetischen Leistung der elektrischen Maschine (1) verglichen wird, und
   - das anhand des Maschinenmodells berechnete Drehmoment ($Trq_{EmMdl}$) der elektrischen Maschine (1) als unplausibel eingestuft wird, falls eine Abweichung des ersten Wertes ($Pwr_{EmMdl}$) der elektromagnetischen Leistung der elektrischen Maschine (1) von dem zweiten Wert ($Pwr_{EmSens}$) der elektromagnetischen Leistung der elektrischen Maschine (1) einen vorgegebenen Leistungs-Schwellenwert ($Pwr_{ErrLim}$) übersteigt.

2. Verfahren nach Anspruch 1, wobei durch das Maschinenmodell eine Polpaarzahl (p), ein Längsstrom ($I_{sd}$), ein Querstrom ($I_{sq}$), ein Erregerfluss ($\psi_{Exc}$) sowie eine Längsinduktivität ($L_{sd}$) und eine Querinduktivität ($L_{sq}$) der elektrischen Maschine (1) vorgegeben wird und aus diesen Parametern das Drehmoment ($Trq_{EmMdl}$) der elektrischen Maschine (1) berechnet wird.

3. Verfahren nach einem der Ansprüche 1 oder 2, wobei die Drehzahl (n) der elektrischen Maschine (1) gemessen wird.

4. Verfahren nach einem der Ansprüche 1 oder 2, wobei die Drehzahl (n) aus dem Winkeldifferential zweier zeitlich versetzt gemessener Stromzeiger ermittelt wird.

5. Verfahren nach einem der Ansprüche 1 bis 4, wobei mindestens einer der Statorströme ($I_{sU}$; $I_{sV}$; $I_{sW}$) gemessen wird und alle nicht gemessenen Statorströme ($I_{sU}$; $I_{sV}$; $I_{sW}$) rechnerisch ermittelt werden.

6. Verfahren nach einem der Ansprüche 1 bis 4, wobei alle Statorströme ($I_{sU}$, $I_{sV}$, $I_{sW}$) gemessen werden und ein Fehler bei der Messung der Statorströme ($I_{sU}$, $I_{sV}$, $I_{sW}$) detektiert wird, falls die Summe der Statorströme ($I_{sU}$, $I_{sV}$, $I_{sW}$) einen vorgegebenen ersten Statorstrom-Schwellenwert ($I_{sLim}$) übersteigt.

7. Verfahren nach einem der vorhergehenden Ansprüche, wobei die Statorstrangspannungen ($U_{sU}$, $U_{sV}$, $U_{sW}$) rechnerisch ermittelt werden, insbesondere Tastverhältnisse ($dyc_U$, $dyc_V$, $dyc_W$) der einzelnen Phasen (U, V, W) der elektrischen Maschine (1) ermittelt und eine Zwischenkreisspannung ($U_{dcLnk}$) gemessen werden und aus den Tastverhältnissen ($dyc_U$, $dyc_V$, $dyc_W$) und der Zwischenkreisspannung ($U_{dcLnk}$) die Statorstrangspannungen ($U_{sU}$, $U_{sV}$, $U_{sW}$) berechnet werden.

8. Verfahren nach Anspruch 6, wobei bei der Ermittlung der Statorstrangspannungen ($U_{sU}$, $U_{sV}$, $U_{sW}$) aktuelle Fehlerspannungen ($U_{sUErr}$, $U_{sVErr}$, $U_{sWErr}$) berücksichtigt werden.

9. Verfahren nach Anspruch 7, wobei die aktuellen Fehlerspannungen ($U_{sUErr}$, $U_{sVErr}$, $U_{sWErr}$) aus einem Fehlerspannungs-Kennfeld in Abhängigkeit von den Statorströmen ($I_{sU}$, $I_{sV}$, $I_{sW}$) und der Zwischenkreisspannung ($U_{dcLnk}$) ausgelesen werden.

10. Verfahren nach einem der vorhergehenden Ansprüche, wobei bei der Bestimmung des zweiten Wertes ($Pwr_{EmSens}$) der elektromagnetischen Leistung der elektrischen Maschine (1) eine aktuelle Verlustleistung ($Pwr_{ElMaLos}$) der elektrischen Maschine (1) berücksichtigt wird.

11. Verfahren nach Anspruch 10, wobei die aktuelle Verlustleistung ($Pwr_{ElMaLos}$) der elektrischen Maschine (1) aus einem Verlustleistungs-Kennfeld in Abhängigkeit von dem Betrag ($I_s$) des Statorstroms und der Drehzahl (n) ausgelesen wird.

**12.** Verfahren nach einem der vorhergehenden Ansprüche, wobei im Grunddrehzahlbereich der elektrischen Maschine (1) in Abhängigkeit von einem Betrag eines Soll-Drehmoments ($Trq_{EmDes}$) der Betrag eines Soll-Statorstroms ($I_{sDes}$) ermittelt wird, der Betrag des Soll-Statorstroms ($I_{sDes}$) mit dem Betrag ($I_s$) des Statorstromes verglichen wird und das anhand des Maschinenmodells berechnete Drehmoment ($Trq_{EmMdl}$) der elektrischen Maschine (1) als unplausibel eingestuft wird, falls eine Abweichung des Betrags des Soll-Statorstroms ($I_{sDes}$) von dem Betrag ($I_s$) des Ist-Statorstroms einen vorgegebenen zweiten Statorstrom-Schwellenwert ($I_{sErrLim}$) übersteigt.

**13.** Verfahren nach Anspruch 12, wobei der Betrag des Soll-Statorstroms ($I_{sDes}$) aus einem Statorstromkennfeld in Abhängigkeit von dem Soll-Drehmoment ($Trq_{EmDes}$) ausgelesen wird.

**14.** Verfahren nach einem der Ansprüche 12 oder 13, wobei abhängig von dem zweitem Wert ($Pwr_{EmSens}$) der elektromagnetischen Leistung der elektrischen Maschine (1) und der Drehzahl (n) ein Vorzeichen eines wirksamen Drehmoments ($Trq_{Em}$) ermittelt wird und das anhand des Maschinenmodells berechnete Drehmoment ($Trq_{EmMdl}$) als unplausibel eingestuft wird, falls das Vorzeichen des wirksamen Drehmoments ($Trq_{Em}$) ungleich dem Vorzeichen des Soll-Drehmoments ($Trq_{EmDes}$) ist.

**15.** Maschinenregler zum Regeln einer elektrischen Maschine (1), **gekennzeichnet durch**

- Mittel zum Bestimmen eines ersten Wertes ($Pwr_{EmMdl}$) einer elektromagnetischen Leistung der elektrischen Maschine (1) aus einem anhand eines Maschinenmodells berechneten Drehmoment ($Trq_{EmMdl}$) und einer Drehzahl (n) der elektrischen Maschine (1),
- Mittel zum Berechnen von Statorstromkomponenten ($I_{sA}$, $I_{sB}$) und Statorstrangspannungskomponenten ($U_{sA}$, $U_{sB}$) bezüglich eines statorfesten Bezugssystems aus Statorströmen ($I_{sU}$, $I_{sV}$, $I_{sW}$) und Statorstrangspannungen ($U_{sU}$, $U_{sV}$, $U_{sW}$),
- Mittel zum Bestimmen eines zweiten Wertes ($Pwr_{EmSens}$) der elektromagnetischen Leistung der elektrischen Maschine (1) aus den Statorstromkomponenten ($I_{sA}$, $I_{sB}$) und den Statorstrangspannungskomponenten ($U_{sA}$, $U_{sB}$),
- Mittel zum Vergleichen des ersten Wertes ($Pwr_{EmMdl}$) der elektromagnetischen Leistung der elektrischen Maschine (1) mit dem zweiten Wert ($Pwr_{EmSens}$) der elektromagnetischen Leistung der elektrischen Maschine (1), und
- Mittel zur Fehlererkennung, wobei

das anhand des Maschinenmodells berechnete Drehmoment ($Trq_{EmMdl}$) der elektrischen Maschine (1) als unplausibel eingestuft wird, falls eine Abweichung des ersten Wertes ($Pwr_{EmMdl}$) der elektromagnetischen Leistung der elektrischen Maschine (1) von dem zweiten Wert ($Pwr_{EmSens}$) der elektromagnetischen Leistung der elektrischen Maschine (1) einen vorgegebenen Leistungs-Schwellenwert ($Pwr_{EmLim}$) übersteigt.

**Claims**

**1.** Method for checking the plausibility of a torque ($Trq_{EmMdl}$), calculated with the aid of a machine model, of an electric machine (1), the method being **characterized in that**

- a first value ($Pwr_{EmMdl}$) of an electromagnetic power of the electric machine (1) is determined from the calculated torque ($Trq_{EmMdl}$) and a rotational speed (n) of the electric machine (1),
- stator currents ($I_{sU}$, $I_{sV}$, $I_{sW}$) and stator phase voltages ($U_{sU}$, $U_{sV}$, $U_{sW}$) in the phases (U, V, W) of the electric machine (1) are determined,
- stator current components ($I_{SA}$, $I_{SB}$) are calculated from the stator currents ($I_{sU}$, $I_{sV}$, $I_{sW}$) and the stator phase voltages ($U_{sU}$, $U_{sV}$, $U_{sW}$) with reference to a reference system fixed to the stator,
- a second value ($Pwr_{EmSens}$) of the electromagnetic power of the electric machine (1) is determined from the stator current components ($I_{SA}$, $I_{SB}$) and the stator phase components ($U_{SA}$, $U_{SB}$),
- the first value ($Pwr_{EmMdl}$) of the electromagnetic power of the electric machine (1) is compared with the second value ($Pwr_{EmSens}$) of the electromagnetic power of the electric machine (1), and
- the torque ($Trq_{EmMdl}$), calculated with the aid of the machine model, of the electric machine (1) is classified as implausible if a deviation of the first value ($Pwr_{EmMdl}$) of the electromagnetic power of the electric machine (1) from the second value ($Pwr_{EmSens}$) of the electromagnetic power of the electric machine (1) exceeds a prescribed power threshold value ($Pwr_{ErrLim}$).

2. Method according to Claim 1, in which the machine model prescribes a pole pair number (p), a direct-axis current ($I_{sd}$), a cross current ($I_{sq}$), an excitation flux ($\psi_{Exc}$) as well as a series inductance ($L_{sd}$) and a shunt inductance ($L_{sq}$) of the electric machine (1), and the torque ($Trq_{EmMdl}$) of the electric machine (1) is calculated from said parameters.

3. Method according to either of Claims 1 and 2, in which the rotational speed (n) of the electric machine (1) is measured.

4. Method according to either of Claims 1 and 2, in which the rotational speed (n) is determined from the angular differential between two temporally offset measured current vectors.

5. Method according to one of Claims 1 to 4, in which at least one of the stator currents ($I_{sU}$; $I_{sV}$; $I_{sW}$) is measured and all stator currents ($I_{sU}$; $I_{sV}$; $I_{sW}$) not measured are determined by computation.

6. Method according to one of Claims 1 to 4, in which all stator currents ($I_{sU}$, $I_{sV}$, $I_{sW}$) are measured and an error in the measuring of the stator currents ($I_{sU}$, $I_{sV}$, $I_{sW}$) is detected if the sum of the stator currents ($I_{sU}$, $I_{sV}$, $I_{sW}$) exceeds a prescribed first stator current threshold value ($I_{sLim}$).

7. Method according to one of the preceding claims, in which the stator phase voltages ($U_{sU}$, $U_{sV}$, $U_{sW}$) are determined by computation, in particular duty ratios ($dyc_U$, $dyc_V$, $dyc_W$) of the individual phases (U, V, W) of the electric machine (1) are determined and an intermediate circuit voltage ($U_{dcLnk}$) is measured, and the stator phase voltages ($U_{sU}$, $U_{sV}$, $U_{sW}$) are calculated from the duty ratios ($dyc_U$, $dyc_V$, $dyc_W$) and the intermediate circuit voltage ($U_{dcLnk}$).

8. Method according to Claim 6, in which current error voltages ($U_{sUErr}$, $U_{sVErr}$, $U_{sWErr}$) are taken into account in determining the stator phase voltages ($U_{sU}$, $U_{sV}$, $U_{sW}$).

9. Method according to Claim 7, in which the current error voltages ($U_{sUErr}$, $U_{sVErr}$, $U_{sWErr}$) are read out from an error voltage characteristic diagram as a function of the stator currents ($I_{sU}$, $I_{sV}$, $I_{sW}$) and the intermediate circuit voltage ($U_{dcLnk}$).

10. Method according to one of the preceding claims, in which a current power loss ($Pwr_{ElMaLos}$) of the electric machine (1) is taken into account in determining the second value ($Pwr_{EmSens}$) of the electromagnetic power of the electric machine (1).

11. Method according to Claim 10, in which the current power loss ($Pwr_{ElMaLos}$) of the electric machine (1) is read out from a power loss characteristic diagram as a function of the absolute value ($I_s$) of the stator current and the rotational speed (n).

12. Method according to one of the preceding claims, in which the absolute value of a desired stator current ($I_{sDes}$) is determined in the basic rotational speed range of the electric machine (1) as a function of an absolute value of a desired torque ($Trq_{EmDes}$), the absolute value of the desired stator current ($I_{sDes}$) is compared with the absolute value ($I_s$) of the stator current, and the torque ($Trq_{EmMdl}$), calculated with the aid of the machine model, of the electric machine (1) is classified as implausible if a deviation in the absolute value of the desired stator current ($I_{sDes}$) from the absolute value ($I_s$) of the actual stator current exceeds a prescribed second stator current threshold value ($I_{sErrLim}$).

13. Method according to Claim 12, in which the absolute value of the desired stator current ($I_{sDes}$) is read out from a stator current characteristic diagram as a function of the desired torque ($Trq_{EmDes}$).

14. Method according to either of Claims 12 and 13, in which a sign of an effective torque ($Trq_{Em}$) is determined as a function of the second value ($Pwr_{EmSens}$) of the electromagnetic power of the electric machine (1) and the rotational speed (n), and the torque ($Trq_{EmMdl}$) calculated with the aid of the machine model is classified as implausible if the sign of the effective torque ($Trq_{Em}$) is not equal to the sign of the desired torque ($Trq_{EmDes}$).

15. Machine controller for controlling an electric machine (1), **characterized by**

- means for determining a first value ($Pwr_{EmMdl}$) of an electromagnetic power of the electric machine (1) from a torque ($Trq_{EmMdl}$), calculated with the aid of a machine model, and a rotational speed (n) of the electric machine (1),
- means for calculating stator current components ($I_{SA}$, $I_{SB}$) and stator voltage components ($U_{SA}$, $U_{SB}$) of a reference system, fixed to the stator, from stator currents ($I_{sU}$, $I_{sV}$, $I_{sW}$) and stator phase voltages ($U_{sU}$, $U_{sV}$, $U_{sW}$),

- means for determining a second value (Pwr$_{EmSens}$) of the electromagnetic power of the electric machine (1) from the stator current components (I$_{SA}$, I$_{sB}$) and the stator phase voltage components (U$_{SA}$, U$_{sB}$),
- means for comparing the first value (Pwr$_{EmMdl}$) of the electromagnetic power of the electric machine (1) with the second value (Pwr$_{EmSens}$) of the electromagnetic power of the electric machine (1), and
- means for error detection, in which the torque (Trq$_{EmMdl}$), calculated with the aid of the machine model, of the electric machine (1) is classified as implausible if a deviation of the first value (Pwr$_{EmMdl}$) of the electromagnetic power of the electric machine (1) from the second value (Pwr$_{EmSens}$) of the electromagnetic power of the electric machine (1) exceeds a prescribed power threshold value (Pwr$_{ErrLim}$).

**Revendications**

1.  Procédé pour rendre plausible un couple (Trq$_{EmMdl}$) d'une machine électrique (1) calculé à l'aide d'un modèle de machine, le procédé étant **caractérisé en ce**

    - **qu'**une première valeur (Pwr$_{EmMdl}$) d'une puissance électromagnétique de la machine électrique (1) est déterminée à partir du couple (Trq$_{EmMdl}$) calculé et d'une vitesse de rotation (n) de la machine électrique (1),
    - **que** les courants de stator (I$_{sU}$, I$_{sV}$, I$_{sW}$) et les tensions de branche de stator (U$_{sU}$, U$_{sV}$, U$_{sW}$) dans les phases (U, V, W) de la machine électrique (1) sont déterminés,
    - **que** des composantes de courant de stator (I$_{sA}$, I$_{sB}$) et des composantes de tension de branche de stator (U$_{sA}$, U$_{sB}$) sont calculées à partir des courants de stator (I$_{sU}$, I$_{sV}$, I$_{sW}$) et des tensions de branche de stator (U$_{sU}$, U$_{sV}$, U$_{sW}$) par rapport à un système de référence fixe du stator,
    - **qu'**une deuxième valeur (Pwr$_{EmSens}$) de la puissance électromagnétique de la machine électrique (1) est déterminée à partir des composantes de courant de stator (I$_{sA}$, I$_{sB}$) et des composantes de tension de branche de stator (U$_{sA}$, U$_{sB}$),
    - **que** la première valeur (Pwr$_{EmMdl}$) de la puissance électromagnétique de la machine électrique (1) est comparée avec la deuxième valeur (Pwr$_{EmSens}$) de la puissance électromagnétique de la machine électrique (1) et
    - **que** le couple (Trq$_{EmMdl}$) de la machine électrique (1) calculé à l'aide du modèle de machine est classifié comme non plausible dans le cas où une différence entre la première valeur (Pwr$_{EmMdl}$) de la puissance électromagnétique de la machine électrique (1) et la deuxième valeur (Pwr$_{EmSens}$) de la puissance électromagnétique de la machine électrique (1) dépasse une valeur de seuil de puissance prédéfinie (Pwr$_{EmLim}$).

2.  Procédé selon la revendication 1, selon lequel un nombre de paires de pôles (p), un courant longitudinal (I$_{sd}$), un courant transversal (I$_{sq}$), un flux d'excitateur ($\psi_{Exc}$) ainsi qu'une inductance longitudinale (L$_{sd}$) et une inductance transversale (L$_{sq}$) de la machine électrique (1) sont prédéfinis par le modèle de machine et le couple (Trq$_{EmMdl}$) de la machine électrique (1) est calculé à partir de ces paramètres.

3.  Procédé selon l'une des revendications 1 ou 2, selon lequel la vitesse de rotation (n) de la machine électrique (1) est mesurée.

4.  Procédé selon l'une des revendications 1 ou 2, selon lequel la vitesse de rotation (n) est déterminée à partir de l'angle différentiel de deux indicateurs de courant mesurés avec un décalage dans le temps.

5.  Procédé selon l'une des revendications 1 à 4, selon lequel au moins l'un des courants de stator (I$_{sU}$, I$_{sV}$, I$_{sW}$) est mesuré et tous les courants de stator (I$_{sU}$, I$_{sV}$, I$_{sW}$) non mesurés sont déterminés par calcul.

6.  Procédé selon l'une des revendications 1 à 4, selon lequel tous les courants de stator (I$_{sU}$, I$_{sV}$, I$_{sW}$) sont mesurés et une erreur est détectée lors de la mesure des courants de stator (I$_{sU}$, I$_{sV}$, I$_{sW}$) dans le cas où la somme des courants de stator (I$_{sU}$, I$_{sV}$, I$_{sW}$) dépasse une première valeur de seuil de courant de stator prédéfinie (I$_{sLim}$).

7.  Procédé selon l'une des revendications précédentes, selon lequel les tensions de branche de stator (U$_{sU}$, U$_{sV}$, U$_{sW}$) sont déterminées par calcul, les rapports cycliques (dyC$_U$, dyC$_V$, dyC$_W$) des phases (U, V, W) individuelles de la machine électrique (1) sont notamment déterminés et une tension de circuit intermédiaire (U$_{dcLnk}$) est mesurée, et les tensions de branche de stator (U$_{sU}$, U$_{sV}$, U$_{sW}$) sont calculées à partir des rapports cycliques (dyC$_U$, dyC$_V$, dyC$_W$) et de la tension de circuit intermédiaire (U$_{dcLnk}$).

8.  Procédé selon la revendication 6, selon lequel les tensions de défaut actuelles (U$_{sUErr}$, U$_{sVErr}$, U$_{sWErr}$) sont prises en compte lors de la détermination des tensions de branche de stator (U$_{sU}$, U$_{sV}$, U$_{sW}$).

**9.** Procédé selon la revendication 7, selon lequel les tensions de défaut actuelles ($U_{sUErr}$, $U_{sVErr}$, $U_{sWErr}$) sont relevées à partir d'un diagramme caractéristique de tension de défaut en fonction des courants de stator ($I_{sU}$, $I_{sV}$, $I_{sW}$) et de la tension de circuit intermédiaire ($U_{dcLnk}$).

**10.** Procédé selon l'une des revendications précédentes, selon lequel une perte de puissance actuelle ($Pwr_{ElMaLos}$) de la machine électrique (1) est prise en compte lors de la détermination de la deuxième valeur ($Pwr_{EmSens}$) de la puissance électromagnétique de la machine électrique (1).

**11.** Procédé selon la revendication 10, selon lequel la perte de puissance actuelle ($Pwr_{ElMaLos}$) de la machine électrique (1) est relevée à partir d'un diagramme caractéristique de perte de puissance en fonction de la valeur ($I_s$) du courant de stator et de la vitesse de rotation (n).

**12.** Procédé selon l'une des revendications précédentes, selon lequel la valeur d'un courant de stator de consigne ($Is_{Des}$) est déterminée dans la plage de vitesses de rotation de base de la machine électrique (1) en fonction d'une valeur d'un couple de consigne ($Trq_{EmDes}$), la valeur d'un courant de stator de consigne ($Is_{Des}$) est comparée avec la valeur ($I_s$) du courant de stator et le couple ($Trq_{EmMdl}$) de la machine électrique (1) calculé à l'aide du modèle de machine est classifié comme non plausible dans le cas où une différence entre la valeur du courant de stator de consigne ($Is_{Des}$) et la valeur du courant de stator réel ($I_s$) dépasse une deuxième valeur de seuil de courant de stator prédéfinie ($I_{sErrLim}$).

**13.** Procédé selon la revendication 12, selon lequel la valeur du courant de stator de consigne ($I_{sDes}$) est relevée à partir d'un diagramme caractéristique de courant de stator en fonction du couple de consigne ($Trq_{EmDes}$).

**14.** Procédé selon l'une des revendications 12 ou 13, selon lequel un signe d'un couple effectif ($Trq_{Em}$) est déterminé en fonction de la deuxième valeur ($Pwr_{EmSens}$) de la puissance électromagnétique de la machine électrique (1) et de la vitesse de rotation (n) et le couple ($Trq_{EmMdl}$) calculé à l'aide du modèle de machine est classifié comme non plausible dans le cas où le signe du couple effectif ($Trq_{Em}$) est différent du signe du couple de consigne ($Trq_{EmDes}$).

**15.** Régulateur de machine destiné à réguler une machine électrique (1), **caractérisé par**

- des moyens servant à déterminer une première valeur ($Pwr_{EmMdl}$) d'une puissance électromagnétique de la machine électrique (1) à partir d'un couple ($Trq_{EmMdl}$) calculé à l'aide d'un modèle de machine et d'une vitesse de rotation (n) de la machine électrique (1),
- des moyens servant à calculer des composantes de courant de stator ($I_{sA}$, $I_{sB}$) et des composantes de tension de branche de stator ($U_{sA}$, $U_{sB}$) par rapport à un système de référence fixe du stator à partir des courants de stator ($I_{sU}$, $I_{sV}$, $I_{sW}$) et des tensions de branche de stator ($U_{sU}$, $U_{sV}$, $U_{sW}$),
- des moyens servant à déterminer une deuxième valeur ($Pwr_{EmSens}$) de la puissance électromagnétique de la machine électrique (1) à partir des composantes de courant de stator ($I_{sA}$, $I_{sB}$) et des composantes de tension de branche de stator ($U_{sA}$, $U_{sB}$),
- des moyens servant à comparer la première valeur ($Pwr_{EmMdl}$) de la puissance électromagnétique de la machine électrique (1) avec la deuxième valeur ($Pwr_{EmSens}$) de la puissance électromagnétique de la machine électrique (1) et
- des moyens servant à détecter les erreurs,

le couple ($Trq_{EmMdl}$) de la machine électrique (1) calculé à l'aide du modèle de machine étant classifié comme non plausible dans le cas où une différence entre la première valeur ($Pwr_{EmMdl}$) de la puissance électromagnétique de la machine électrique (1) et la deuxième valeur ($Pwr_{EmSens}$) de la puissance électromagnétique de la machine électrique (1) dépasse une valeur de seuil de puissance prédéfinie ($Pwr_{EmLim}$).

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2007025839 A1
- DE 10019152 A1
- WO 2005014329 A1
- DE 102008008536 A1
- DE 102006005854 A1